**Europäisches Patentamt**

**European Patent Office**

**Office européen des brevets**

(19)

(11) Veröffentlichungsnummer: **0 143 945**
**A1**

(12) # EUROPÄISCHE PATENTANMELDUNG

(21) Anmeldenummer: **84111911.8**

(22) Anmeldetag: **04.10.84**

(51) Int. Cl.⁴: **B 65 G 60/00**

(30) Priorität: **05.10.83 DE 3336109**

(43) Veröffentlichungstag der Anmeldung:
**12.06.85 Patentblatt 85/24**

(84) Benannte Vertragsstaaten:
**CH DE FR GB IT LI NL**

(71) Anmelder: **Kannenberg, Hartmut**
**Wegescheidstrasse 20**
**D-5270 Gummersbach(DE)**

(72) Erfinder: **Kannenberg, Hartmut**
**Wegescheidstrasse 20**
**D-5270 Gummersbach(DE)**

(74) Vertreter: **Baur, Eduard, Dr.-Ing. Dipl.-Ing.**
**Werderstrasse 3**
**D-5000 Köln 1(DE)**

(54) **Vorrichtung zum Stapeln, Transport und Befüllen von Behältern.**

(57) Bei einer Vorrichtung zum Stapeln, Transport und Befüllen von Behältern mit an gegenüberliegenden Seiten vorhandenen, horizontal oder im wesentlichen horizontal verlaufenden Grifflächen, insbesondere Behälter mit rechteckigem Querschnitt und aus Kunststoff sind die übereinander gestapelten Behälter (27) in vertikaler Ebene absatzweise bewegt. Bei einem auf der angeschlossenen Transporteinrichtung (41) aufliegenden unteren Behälter (27) des Stapels ist der darüber befindliche Behälter (27a) des Stapels und der von diesem getragene Stapel der anderen Behälter von einer an gegenüberliegenden Seiten des Behälters anliegenden, in vertikaler Ebene auf- und abbewegbaren Greifern gehalten. Die STapelvorrichtung besteht aus einem Tragteil, das in vertikaler ebene auf- und abbewegbar ist und zwei Greiferarme aufweist. Jeder Greiferarm hat an seinem Ende ein um die Längsachse des Armes schwenkbares Tragelement, das in der einen Stellung die Griffläche des Behälters untergreift und in der anderen Stellung von der Griffläche entfernt ist.

EP 0 143 945 A1

./...

FIG.1

2.10.84 Dr.B/D
5 KÖLN 1,
Werderstraße 3
Telefon (0221) 524208-9

| Kn 702 |
|---|

Reg.-Nr. bitte angeben

Patentanmeldung

des Herrn

Hartmut Kannenberg, Wegescheidstraße 20, 5270 Gummersbach 1

Vorrichtung zum Stapeln, Transport und Befüllen von Behältern.

Die Erfindung betrifft eine Vorrichtung zum Stapeln, Transport und Befüllen von Behältern mit an gegenüberliegenden Seiten vorhandenen, horizontal oder im wesentlichen horizontal verlaufenden Griffflächen, insbesondere von Behältern mit rechteckigem Querschnitt und aus Kunststoff.

Bekannt sind Behälter aus Kunststoff, die einen quadratischen oder rechteckigen Querschnitt haben und stapelbar sind. Dazu sind die Oberseiten des unteren Behälters und die Unterseiten des dazu oberen Behälters entsprechend ausgebildet. Auch haben diese Behälter, die meistens aus Kunststoff bestehen, an gegenüberliegenden Seiten Griffflächen, so daß sie über diese Griffflächen von Hand oder auch maschinell erfaßbar sind. Ein bekanntes Beispiel für solche Behälter aus Kunststoff sind Bierkästen.

Zum Befüllen von Behältern erfolgt bisher die Zuführung der zu befüllenden Behälter in der Weise, daß diese hintereinander angeordnet unter eine Befüllstation gebracht werden. Bei dieser Befüllstation kann es sich um eine solche handeln, die maschinell befüllt, so beispielsweise eine Befülleinrichtung, die Flaschen oder dergleichen Körper einheitlicher Größe einlegt, so beispielsweise auch Konservenbüchsen. Es kann aber auch eine maschinelle Befüllung mit einem Schüttgut erfolgen. Schließlich ist es auch möglich, daß die Befüllung von Hand erfolgt.

Es gibt viele Anwendungsfälle zum Stapeln, Transport und Befüllen von Behältern, die nicht das ganze Jahr über nötig werden, sondern saisonweise. Das ist beispielsweise der Fall bei Ernteprodukten, die nur zu bestimmten Jahreszeiten anfallen. Hingewiesen wird beispielsweise auf die Ernte von Kartoffeln. Hingewiesen werden kann auch auf die Weinernte, weil das Endprodukt zunächst abgefüllt in Flaschen, vielfach kurzfristig verpackt wird. In solchen Fällen ist eine Vorrichtung zum Stapeln, Transport und Befüllen von Behältern zweckmäßig, die von geringen Abmessungen und leichtem Gewicht ist. Auch soll sie bei Nichtgebrauch weggestellt und dazu verminderte Abmessungen haben.

Die vorliegende Erfindung geht von der Aufgabe aus, eine Vorrichtung zum Stapeln, Transport und Befüllen von Behältern zu schaffen, die auf geringem Raum eine Zufuhr leerer Behälter und nach deren Befüllung eine Abfuhr gestapelter befüllter Behälter zuläßt, wobei zugleich diese Vorrichtung, sofern sie nicht gebraucht wird, zusammengeklappt geringstmögliche Abmessungen hat und insbesondere in Kleinbetrieben anwendbar ist.

Zur Lösung dieser Aufgabe wird bei einer Vorrichtung zum Stapeln, Transport und Befüllen von Behältern mit an gegenüberliegenden Seiten vorhandenen, horizontal oder im wesentlichen horizontal verlaufenden Griffflächen, insbesondere Behältern mit rechteckigem Querschnitt und aus Kunststoff, erfindungsgemäß eine Stapeleinrichtung vorgeschlagen, bei der die übereinander gestapelten Behälter in vertikaler Ebene absatzweise bewegt sind und bei einem auf der angeschlossenen Transporteinrichtung aufliegenden unteren Behälter des Stapels der darüber befindliche Behälter des Stapels und der von diesem getragene Stapel der anderen Behälter von einer an gegenüberliegenden Seiten des Behälters anliegenden, in vertikaler Ebene auf- und abbewegbaren Greifern gehalten ist.

Durch die erfindungsgemäße Lösung wird eine Vorrichtung geschaffen, die sehr geringe Abmessungen hat, weil die Behälter im nahen Bereich der Füllstation oder der Befüllung in vertikaler Erstreckung übereinander gestapelt zugeführt werden und dann der jeweils untere Behälter der Befüllvorrichtung oder Befüllungsstation zugeführt wird. Um dies zu erreichen, ist die Vorrichtung so ausgestattet, daß nach dem Absetzen des unteren Behälters auf die Transportvorrichtung, insbesondere in Gestalt eines Transportbandes, der vorletzte Behälter mit dem auf diesem aufgestapelten Behältern um ein geringes Maß abgehoben wird, damit der untereBehälter von diesem Stapel befreit auf der Transportvorrichtung bewegt werden kann.

Dieses vorgeschriebene Prinzip wird in besonders einfacher Weise verwirklicht mit der erfindungsgemäßen Ausbildung, daß die Stapelvorrichtung aus einem Tragteil besteht, das in vertikaler Ebene auf- und abbewegbar ist und zwei Greiferarme aufweist und jeder Greiferarm an seinem Ende ein um die Längsachse des Armes schwenkbares Tragelement aufweist, das in der einen Stellung die Griffläche des Behälters untergreift und in der anderen Stellung von der Griffläche entfernt ist. Diese Lösung ist ein Grundprinzip, das befähigt ist, eine Anpassung an verschiedene Größen und Raumformen der zu transportierenden Behälter zu gewährleisten, auch in Verbindung mit der Maßgabe, daß in weiterer erfindungsgemäßer Ausgestaltung die Länge des die Arme tragenden Tragteils und die Länge der Arme selbst veränderlich ist. Dies ist besonders vorteilhaft verwirklicht in der weiteren erfindungsgemäßen Lösung, daß das Tragteil aus einem ersten Rohr besteht, an dem einem jeden Ende zugeordnet aus Rohren bestehende Greiferarme befestigt sind und in jedem Arm eine drehbare Stange vorhanden ist, an der das Tragelement befestigt ist.

Das Tragelement kann verschiedene räumliche Ausbildungsformen haben, die sich den jeweiligen Behältern anpassen können. Eine Ausführungsform, die sich nahezu allen Behälterformen anpaßt, besteht in weiterer erfindungsgemäßer Ausgestaltung aus einem L-förmigen Bauelement, insbesondere aus einem Stahlblech, wobei der eine Schenkel an der Stange befestigt ist und der andere Schenkel abhängig von der Verdrehung der Stange die Griffläche des Behälters untergreift oder von dieser entfernt ist.

Die Verdrehung der Stange erfolgt besonders vorteilhaft in der
Weise, daß eine an dem Maschinenrahmen befestigte Führungsschiene
vorhanden ist, an der ein an der Stange befestigter Hebel anliegt.
Dieser Grundvorschlag ermöglicht die weitere erfindungsgemäße Lösung,
daß im Bereich des freien Endes des Hebels und an dem Tragteil eine
Feder befestigt ist, die, sofern der Hebel mit einer an dessen freien
Ende angeordneten Rolle nicht mehr an der Führungsschiene anliegt,
eine Verschwenkung nach außen und somit von der Grifffläche des Behälters
weg erfolgt.

Diese Feder, es kann sich hierbei auch um einen Gummistropp handeln,
ersetzt somit eine besondere Kulissenführung für die Bewegung des
Tragelementes von der Grifffläche weg.

Um ein leichtes Gewicht und auch eine sehr wirksame Führung des Tragteils zu erreichen, wird in weiterer erfindungsgemäßer Ausgestaltung
vorgeschlagen, daß die STapelvorrichtung aus zwei Säulen besteht, an
denen das Tragteil befestigt ist. Die Säulen bestehen dann besonders
vorteilhaft aus Schienen, wobei das Tragteil mit Rollen versehen ist,
die in den Schienen geführt sind.

In weiterer erfindungsgemäßer Ausgestaltung wird vorgeschlagen, daß
an dem Tragteil eine Platte mit einer Gewindebohrung vorhanden ist
und durch die Gewindebohrung eine vertikale Spindel geführt ist, die
über ein Getriebe von einem Elektromotor angetrieben ist. Dies ist
eine besonders vorteilhafte Lösung. Es sei verstanden, daß anstelle der

- 6 -

Gewindespindel auch ein sonstiger Antrieb erfolgen kann. So könnte dieser durch eine Kolben-Zylinder-Anordnung geschehen. Der mechanische Antrieb, angetrieben durch einen Elektromotor, ist aber besonders vorteilhaft, weil dieser eine genaue Steuerung und einen exakten Betrag des wechselseitigen Absenkens und danach geringen Anhebens möglich macht. Anstelle der Spindel dient mit großem Vorteil ein Kettenantrieb.

Die erfindungsgemäße Lösung ist besonders vorteilhaft verwirklicht durch die weitere Maßgabe, daß die an die Stapelvorrichtung angeschlossene Transportvorrichtung aus einem Förderband besteht, das um die Achse der an der Stapelvorrichtung angelenkten Umlenkrolle schwenkbar ist.

Um in der Nichtgebrauchsstellung einen geringen Raumbedarf zu erhalten, wird in weiterer erfindungsgemäßer Ausgestaltung vorgeschlagen, daß der elektrische Antriebsmotor für das Förderband an dem Gestell der Stapelvorrichtung befestigt ist, die abgehende Welle des Elektromotors mit einem Zahnrad für eine Antriebswelle versehen ist und die Umlenkrolle des Förderbandes als Antriebswalze mit einem Kettenrad versehen ist. Durch diese Lösung ist in besonders einfacher Weise gewährleistet, daß das Förderband, sofern es nicht gebraucht wird, hochgeklappt wird.

Die erfindungsgemäße Lösung gestattet auch, die befüllten Behälter zu stapeln. Um dies zu erreichen, wird in weiterer erfindungsgemäßer

- 7 -

Ausgestaltung vorgeschlagen, daß eine erste Stapelvorrichtung vorhanden ist, in der die übereinander gestapelten Behälter nach unten geführt und der jeweils untere Behälter auf ein Transportband aufgelegt und auf diesem unter eine Füllstation geführt ist und an die Füllstation bzw. das Ende des Transportbandes eine Stapelvorrichtung vorhanden ist, die die gefüllten Behälter nach oben führt.

In weiterer erfindungsgemäßer Ausgestaltung wird vorgeschlagen, daß die Vorrichtung zum Hochtransport der gefüllten Behälter der Vorrichtung zum Transport der leeren Behälter nach unten entspricht.

Besonders vorteilhaft ist jedoch die weitere erfindungsgemäße Lösung, daß im Anschluß an die Füllstation ein weiteres, in Horizontalebene förderndes Förderband angeordnet ist und dieses Förderband zusammen mit dem auf diesem aufliegenden gefüllten Behälter in einem Gestell angeordnet ist, das mit Einrichtungen zum Anheben und Absenken des Förderbandes versehen ist und an diesem Gestell jeweils verschiedene Höhenlagen zugeordnet, mehrere wegführende Fördereinrichtungen vorhanden sind, die vorteilhaft aus leicht nach unten geneigten Rollenbahnen bestehen.

Diese Lösung mit dem Grundprinzip, vertikale Zuführung der gestapelten leeren Behälter nach unten, Bewegung des jeweils unteren Behälters in horizontaler Ebene unterhalb einer Befüllstation und dann die Abfuhr der befüllten Behälter nach oben, ist insbesondere für kleinere Betriebe von erheblichem Vorteil.

Die Erfindung ist in den Zeichnungen beispielhaft erläutert.
Es zeigen:

| | |
|---|---|
| Figuren 1 und 2 | eine Vorrichtung in Seitenansicht bei verschiedenen Lagen der Behälter, |
| Figur 3 | eine Vorrichtung im wesentlichen schematisch und in perspektivischer Darstellung, |
| Figur 4 | die Vorrichtung in Seitenansicht, |
| Figur 5 | die Vorrichtung in Rückansicht mit Figur 4 gegenüber geringfügig vergrößerter Darstellung, |
| Figuren 6 und 7 | die Steuerung der Greifer. |
| Figur 8 | eine Figur 3 gegenüber abgewandelte Lösung, |
| Figur 9 | einen vertikalen Schnitt durch den Tragarm nach Figur 8 entsprechend der dortigen Linie IX-IX, |
| Figur 10 | eine Figur 9 gegenüber andere Stellung des Tragelementes, |
| Figur 11 | eine Sperrklinke im Tragarm, |
| Figur 12 | die Sperrklinke nach Figur 11 in nach außen geschwenkter STellung, |
| Figur 13 | eine Figur 1 gegenüber abgewandelte Lösung, |
| Figur 14 | die Lösung nach Figur 13 in Stirnansicht. |

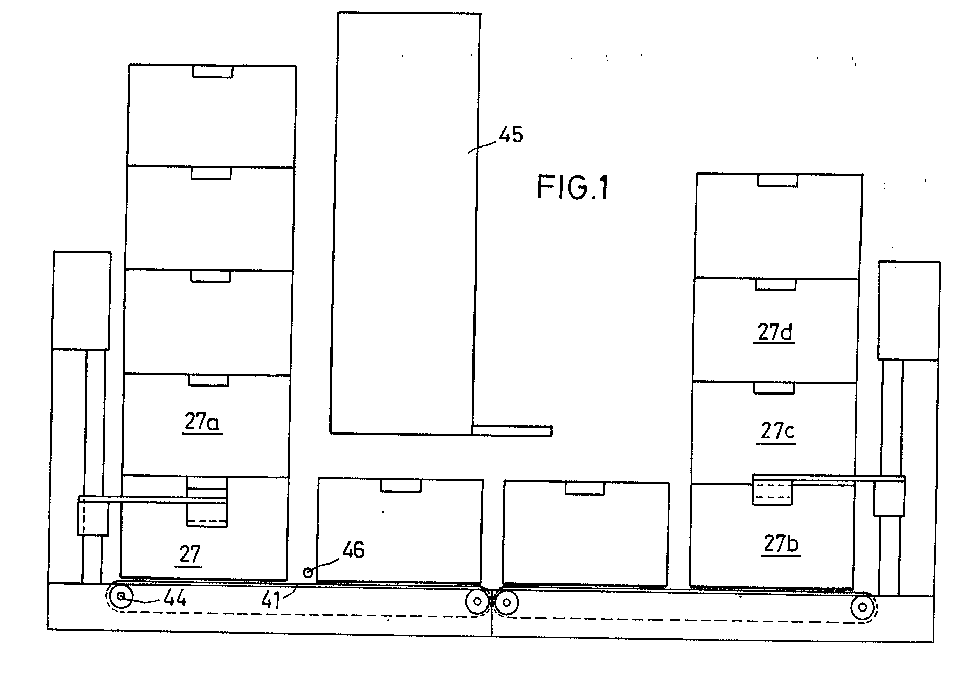

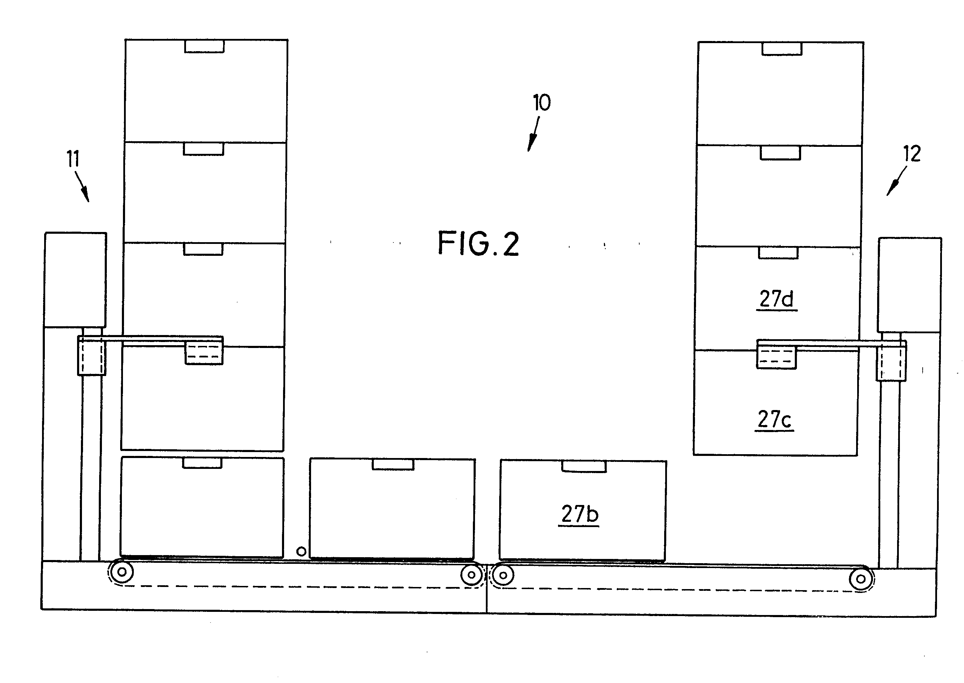

Die Figuren 1 und 2 zeigen eine Gesamtvorrichtung zum Stapeln,
Transport und Befüllen von Behältern, die im linken Bereich aus
einer Stapelvorrichtung 11 besteht, mit der die Behälter in vertikaler
Erstreckung von oben nach unten bewegt und auf das Transportband abgelegt
werden, während im rechten Teil die Stapelvorrichtung vorhanden ist,
mit der die Behälter von dem Förderband entnommen und gestapelt nach
oben bewegt werden.

Es ist nicht unbedingt notwendig, an die Stapelvorrichtung 11 eine
Stapelvorrichtung 12 anzuschließen. Auch können die Stapelvorrichtung 11
und die Stapelvorrichtung 12 einzeln angewendet werden.

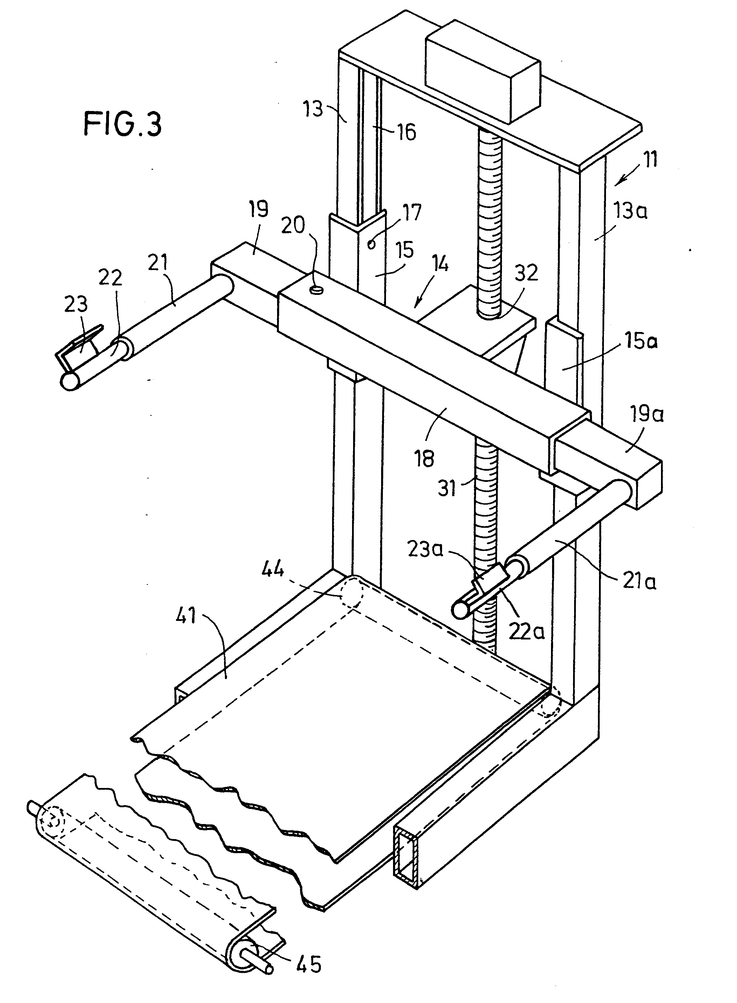

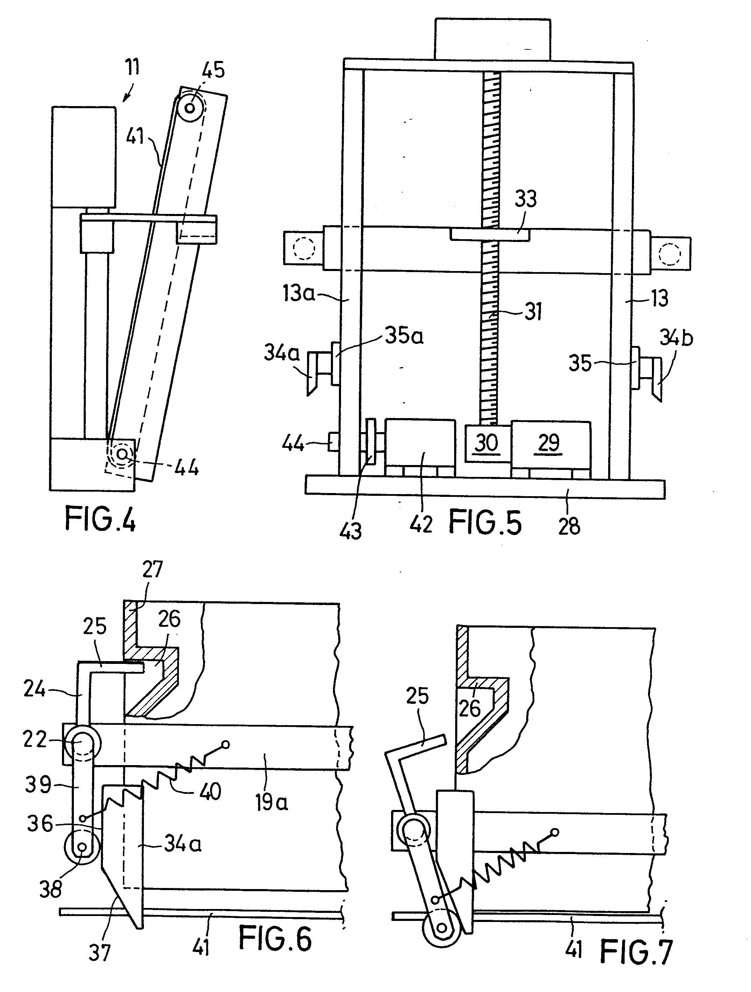

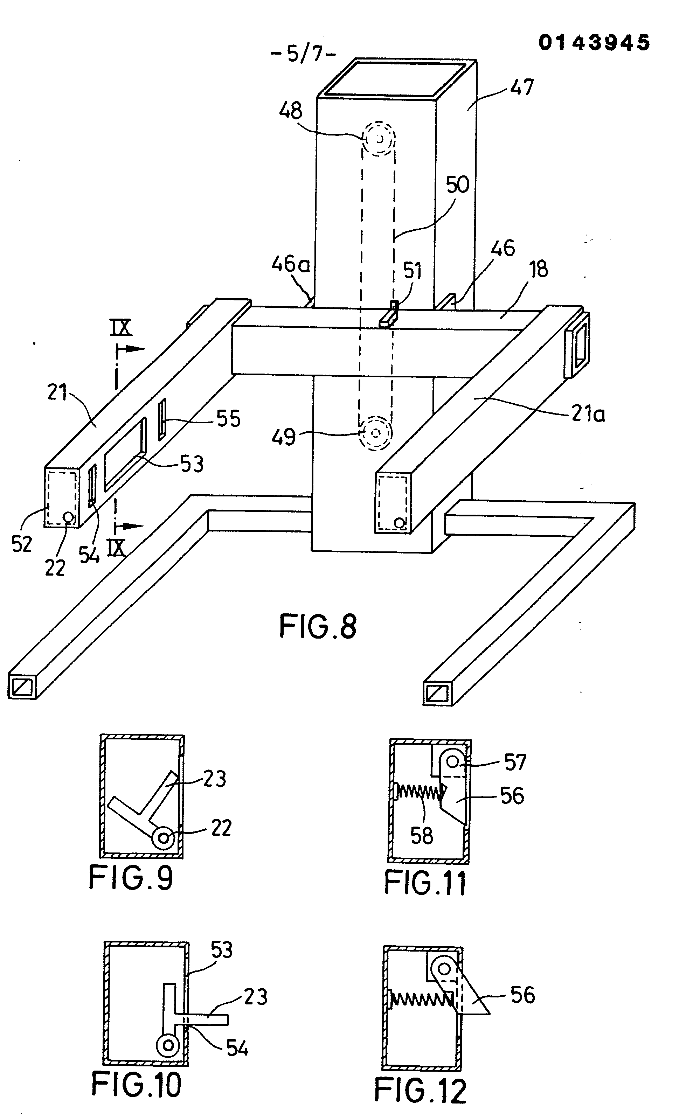

Zunächst sei anhand von Figur 3 die Stapelvorrichtung 11 im einzelnen
beschrieben. Sie besteht aus den beiden Säulen 13 und 14, die nach dem
Ausführungsbeispiel aus U-förmigen Profilen bestehen und somit entsprechende Schienen bilden. An den beiden Säulen ist auf- und abbewegbar
ein Wagen 14 befestigt, der nach dem Ausführungsbeispiel Gleitführungen
15 und 15a hat, die an den Säulen gleiten und in ihrem Inneren Laufräder
haben, die in der Rinne 16 der Säule geführt sind und Drehachsen 17
haben. Der Wagen hat ein Tragteil 18 in Gestalt eines rechteckigen Rohres.
In diesem Rohr sind zwei Rohrstücke 19 und 19a vorhanden. Diese lassen sich mehr oder weniger herausschieben und in einer Stellung beispielsweise durch Anwendung einer Schraube 20 arretieren. Dadurch wird die
erforderliche Weite, die der Länge oder der Breite des zu transportierenden Behälters angepaßt ist, eingestellt. An den Enden dieser Innenrohre
19 und 19a sind jeweils zugeordnet Arme 21 und 21a befestigt, die als
Rohre mit rundem Querschnitt ausgebildet sind. In diesen Rohren sind zugeordnet Stangen 22, 22a vorhanden, die drehbar sind. Diese Stangen tragen
an ihren vorderen Enden jeweils zugeordnet ein Tragelement 23, 23a.
Jedes Tragelement besteht aus einem L-förmigen Profil, wobei, wie auch
aus den Figuren 6 und 7 hervorgeht, der eine Schenkel 24 an der Stange 22,
die den Einsatz im Rohr 21 darstellt, befestigt ist, während der andere
Schenkel 25, abhängig von der Verdrehung des Einsatzes, die Griffläche 26
des Behälters 27 untergreift. Der Behälter 27 besteht aus Kunsttoff.
Er hat an gegenüberliegenden Seiten Ausnehmungen, um die vorerwähnte,
horizontale Griffläche 26 zu erhalten. Es sei bemerkt, daß diese Griffflächen vielfache Ausbildungsformen haben können. So ist es möglich, daß
die Griffläche auch gebildet sein kann durch einen flanschartig vorstehenden Rand.

An dem Bodengestell, nach Figur 5 in einfacher Weise in Gestalt einer
Platte 28 dargestellt, ist der Elektromotor 29 befestigt, dessen Getriebe 30 eine Spindel 31 antreibt, die durch die mit Gewinde versehenen
Bohrung 32 in einer Platte 33 greift, die an dem Tragteil 18 befestigt ist.
Durch Drehung der Spindel wird somit der Wagen an den Säulen bewegt,
wobei abhängig von der Drehungsrichtung der Wagen nach oben oder nach
unten bewegt wird. Das Getriebe 30 ist entsprechend ausgebildet, um die
wechselnden Drehrichtungen der Spindel 31 zu erhalten.

Zur Steuerung der Greifer ist einer jeden Säule 13, 13a zugeordnet eine Kulissenführung 34a, 34b vorhanden. Jede Kulissenführung ist über eine zugeordnete Grundplatte 35, 35a an der zugeordneten Säule durch Schrauben befestigt. Die Höhenlage der Befestigung ist einstellbar, so daß dadurch eine Anpassung an die Höhe eines Behälters erreicht werden kann. Die Kulissenführung 34a hat eine vordere Tastfläche 36 und eine schräge untere Abtastfläche 37. An diesen vorbezeichneten Flächen liegt die Rolle 38 an, die an dem unteren freien Ende des Hebels 39 drehbar gelagert ist.

Das andere Ende des Hebels 39 ist mit der Stange 22, die aus dem Rohr 21 austritt, verbunden. An dem Hebel 39 ist das eine Ende und an dem Innenrohr 19a ist das andere Ende einer Schraubenlinienfeder 40 befestigt, die dafür Sorge trägt, daß die Rolle 38 an der Lauffläche 36 oder 37 anliegt. Figur 6 zeigt, daß die Rolle 38 an der Lauffläche 36 anliegt mit dem Ergebnis, daß der Schenkel 25 die Grifffläche 26 des Behälters 27 untergreift. Damit wird der Behälter von der Greifeinrichtung getragen. Auch ergibt sich aus Figur 6, daß der Behälter 27 in einem Abstand oberhalb eines Transportbandes 41 angeordnet ist. Sobald bei der Bewegung des Wagens nach unten der Behälter entsprechend der Darstellung in Figur 7 auf das Transportband 41 abgesetzt ist und der Wagen mit den Greiferarmen noch weiter nach unten bewegt wird, dann zieht die Feder 40 den Hebel 39 bei der Darstellung nach Figur 7 entgegen dem Uhrzeigersinn mit der Maßgabe, daß der Schenkel 25 von der Grifffläche 26 wegbewegt wird. Diese Wegbewegung erfolgt mit sehr geringer Kraft, weil der Behälter auf dem Band 41 aufliegt und somit während der Schwenkbewegung des Hebels 30 der Schenkel 25 nicht mit dem Gewicht des Behälters belastet ist.

An dem Grundgestell 28 ist ein weiterer Elektromotor 42 befestigt, an dessen abgehender Welle das Kettenrad 43 vorhanden ist. Dieses treibt über eine Kette ein Zahnrad an, das an der vorderen Antriebswelle 44 des Förderbandes 41 befestigt ist. Das Förderband 41 hat weiterhin die vordere Umlenkwelle 45. Durch diese Maßgabe ist es möglich, den Förderer, wie das aus Figur 4 zu ersehen ist, um die Achse der Antriebswelle 44 hochzuklappen, damit bei Nichtgebrauch nur ein geringer Raum vorhanden ist.

Nachdem die Funktionselemente beschrieben worden sind, sei anhand der Figuren 1 und 2 auf die Wirkungsweise eingegangen.

Figur 1 zeigt, daß der untere Behälter 27 auf das Obertrum des Transportbandes 41 aufgelegt worden ist. Dabei erfolgt entsprechend der Darstellung in Figur 7 das Verschwenken der Greiferelemente nach außen. Anschließend erfolgt bei nach außen um die Stäbe 22 geschwenkten Tragelementen ein Hochfahren des Wagens in den Flächenbereich des aufliegenden Behälters 27a. Sobald der Wagen diese Höhe erreicht hat, diese Höhenlage ist durch Endschalter an einer der Säulen zu erreichen oder durch sonstige Maßnahmen, dann wird über den Hebel 39 der Stab 22 mit dem an diesem befestigten Greifer wieder nach innen geschwenkt, und zwar durch eine in diesem Bereich vorhandene weitere Kulissenführung, die auch die Kulissenführung 34 sein kann. Es kann aber auch eine gesonderte Kulissenführung am Maschinengestell, d. h. an den beiden Säulen vorhanden sein.

Sobald die Greifer 23 den Behälter 27a unterfaßt haben, dann wird dieser durch eine Bewegung oder die Weiterbewegung des Wagens nach oben um ein geringes Stück angehoben und zwar so weit, daß der untere
Behälter 27 auf dem Transportband wegbewegt werden kann. Es sei
verstanden, daß die Bewegung des Wagens nach oben kontinuierlich erfolgen
kann, weil die Greifermit einer entsprechenden Kulissenführung die
Grifflöcher untergreifen. Der Behälter 27 wird unter eine Fülleinrichtung
45 gefahren. Die Steuerung des Transportbandes kann über eine Fotozellensteuerung 46 erfolgen. Sobald der Behälter gefüllt ist, dann wird dieser
weiterbewegt und der nächste Behälter durch das Transportband herangeführt, nachdem vorher die vorbeschriebene Arbeitsweise mit dem Aufsetzen
des gesamten Stapels auf dasFörderband mit dem danach erfolgenden Ergreifen des vorletzten Behälters und dessen Anheben mit den anderen
Behältern zum Zwecke der Freigabe des auf dem Förderband aufliegenden
Behälters erfolgt ist.

Nachdem die Behälter gefüllt sind, können sie der nächsten Stapelvorrichtung 12 zugeführt werden. Diese zeigt in Figur 2 die Maßgabe,
daß ein befüllter Behälter 27b unter die angehobenen Behälter 27c, 27d usw.
gefahren werden wird. Sobald dies entsprechend der Darstellung in Figur 1
geschehen ist, dann werden die Behälter 27c und 27d durch eine Greifeinrichtung, die der vorbeschriebenen Greifeinrichtung der Stapelvorrichtung
11 entspricht oder in prinzipieller Weise entspricht, durch den Wagen 18
mit den Greifarmen und den Greifern entsprechend Figur 3 untergefahren,
bis der Behälter 27c auf dem Behälter 27b aufliegt. Dann werden die
Greiferarme ganz heruntergefahren, bis sie den unteren Behälter 27b
erfassen. Dann erfolgt die Bewegung des Behälterstapels nach oben, soweit, bis ein nächster befüllter Behälter in die Stapeleinrichtung gefahren
werden kann.

Die erfindungsgemäße Lösung, insbesondere der Anwendung einer Spindel
mit dem Elektromotor zum Bewegen der Stapel ist sehr vorteilhaft, weil
sie eine genaue Positionierung ermöglicht und auch mit geringen Kräften
befüllte Behälter hochheben läßt. Schließlich kommt zunutze, daß das
Befüllen der Behälter in der Regel eine gewisse Zeit benötigt, in der
dann die vorbeschriebenen Bewegungsabläufe erfolgen können.

Figur 8 zeigt eine Fördervorrichtung mit einem Tragteil 18, das mit
Führungen 46, 46a versehen an einer einzigen Säule 47 auf- und abbeweglich ist. Dazu sind zwei Kettenräder 48 und 49 vorhanden, die von
einer Kette 50 umschlungen sind, an der über ein Befestigungselement 51
der vorerwähnte Tragbalken 18 befestigt ist. Das Kettenrad 48 oder das
Kettenrad 49 ist mit einem Elektromotor verbunden, so daß abhängig von
der Drehrichtung des Elektromotors eine Bewegung nach oben oder nach
unten erfolgt.

Die an dem Querbalken verschiebbar gelagerten Greiferarme sind Rohre
mit recheckigem Querschnitt, in denen jeweils zugeordnet die Stange 22
mit dem Tragelement 23 angeordnet ist. Die Stange 22 ist in der Stirnwandung 52 außermittig in der Weise gelagert, daß in der einen Stellung
der Verdrehung, die in Figur 9 angegeben ist, das Tragelement innerhalb
des Rohres 21 angeordnet ist, während es in der anderen Stellung, die Figur 10 zeigt, aus dem Rohr hinausragt. Zu diesem Zweck hat das Rohr lediglich im Bereich des Tragelementes 23 einen fensterartigen Ausschnitt 53, dessen untere Linie 54, wie Figur 10 zeigt, ein Anschlag für das Tragelement 21 bildet. Durch diese Lösung wird nicht lediglich ein Schutz des Tragelementes erreicht, weil es in der einen Stellung vollkommen im Rohr angeordnet ist, sondern auch mit einfachen Mitteln eine hohe Tragfähigkeit hat.

Aus Figur 8 ist zu ersehen, daß neben dem Fensterausschnitt 53 zwei weitere schmale Ausschnitte 54 und 55 vorhanden sind. In deren Bereich sind in den Figuren 11 und 12 dargestellte Sperrklinken 56 vorhanden, die um die horizontale Achse 57 schwenkbar sind und durch eine Druckfeder 58 nach außen gedrückt werden. Die Sperrklinken sind vorhanden, um ineinander gestapelte Behälter zu trennen. Bei der Bewegung des Behälters in Richtung von oben nach unten an den Tragarmen 21, 21a werden vorbei die Klinken 56 entgegen dem Druck der Feder 58 nach innen geschwenkt. Sofern jedoch nach Figur 1 der Behälter 27a von dem Behälter 27 um ein geringes Maß nach oben abgehoben wird, dann verhindert die an dem unteren Behälter 27 anliegende Sperrklinke 56 deren Hochwandern zusammen mit dem Behälter 27a.

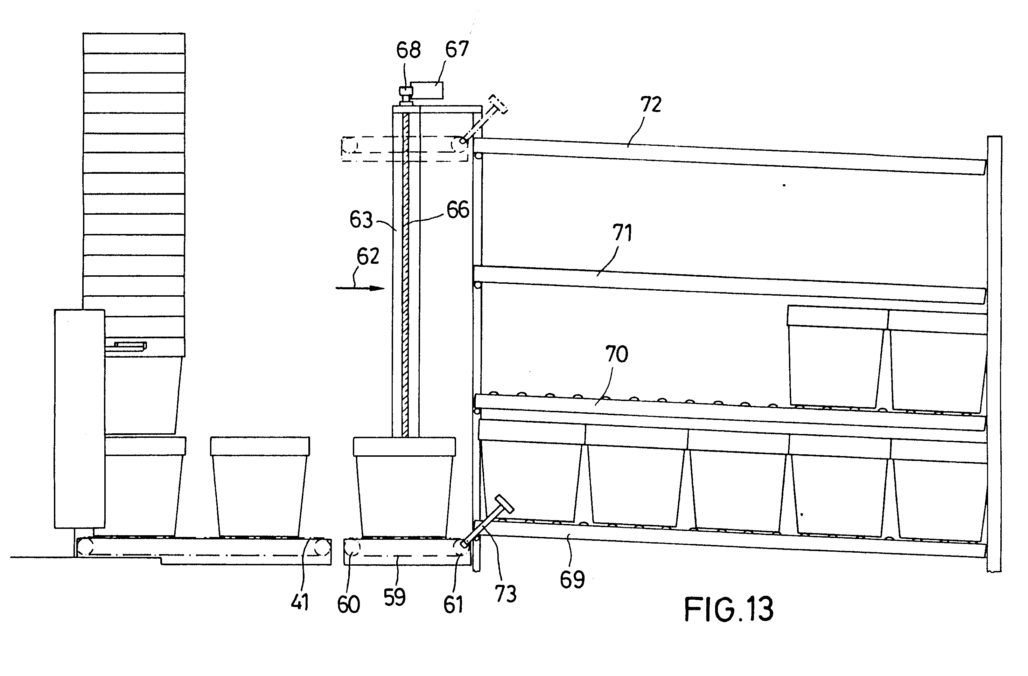

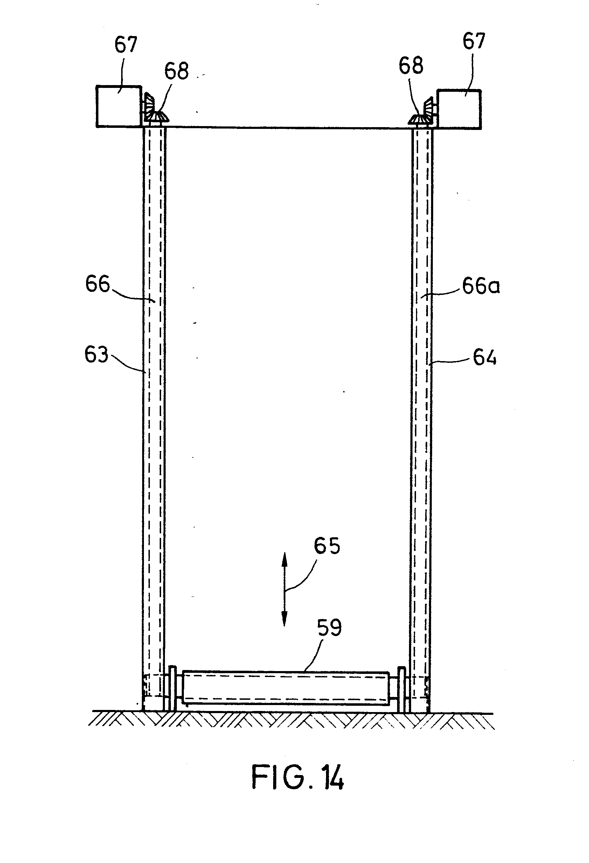

Figur 13 zeigt die Lösung, daß im Anschluß an das Förderband 41 ein weiteres Förderband 59 mit Umlenkrollen 60 und 61 vorhanden ist, das einen eigenen Antrieb hat. Dieses Förderband ist gelagert in einem Gestell 62 mit den beiden Säulen 63 und 64, die mit Fördereinrichtungen versehen sind, um das Förderband 59 in der in Figur 14 dargestellten Doppelpfeilrichtung 65 zu bewegen und zwar zusammen mit dem aufliegenden gefüllten Behälter nach oben in eine Höhenlage zu führen, damit der gefüllte Behälter anschließend auf eine Rollenbahn abgegeben wird. Zum Anheben und Absenken des Förderbandes 59 sind in den Figuren 13 und 15 Spindeln 66, 66a mit jeweils zugeordneten Elektromotoren 67 und 67a vorhanden, die über Kegelgetriebe 68 bzw. 68a die Spindeln drehen und dabei das an den Spindeln befestigte Gestell des Förderbandes anheben. Es sei verstanden, daß auch nach dem in Figur 8 dargestellten Prinzip ein Kettenantrieb möglich ist.

An dem Gestell 63, 64 sind in verschiedenen Höhenlagen Rollenbahnen 69, 70, 71 und 72 vorhanden, die eine leicht nach unten gerichtete Neigung haben. Die Steuerung des Förderbandes 59 in dessen Auf- und Abwärtsbewegung sowie die Bestimmung der Höhenlage zum Weitertransport des gefüllten Behälters auf eine der Rollenbahnen 69 bis 72 erfolgt durch eine an dem Gestell des Förderbandes 59 befestigte Photozelle 73.

Figur 13 zeigt in voll ausgezogener Linie die untere Stellung des in Vertikalrichtung bewegbaren Förderbandes 59 und in gestrichelter Linie dessen oberste Stellung, damit durch das Förderband 59 mit dessen Bewegung die Übergabe des Behälters auf die Rollenbahn 72

**0143945**

erfolgt. Die Photozellen-Steuerung erfaßt, ob die Standbahn mit einem Behälter belegt ist oder nicht. Sofern im Wirkungsbereich der Photozelle, wie in Figur 13 in der unteren Stellung dargelegt, ein Behälter vorhanden ist, dann wird das Förderband mit Behälter um eine Etage höher gefahren.

Im übrigen gestattet die in Figur 3 dargestellte Lösung, daß die Behälter, die einer Rollenbahn jeweils zugeordnet werden sollen, zugleich verschiedene Verteilerwege erhalten, so daß die erfindungsgemäße Lösung mit einfachen Mitteln den Vertrieb begünstigt. So kann die untere Rollenbahn 69 für einen bestimmten Abnehmer gelten oder für ein bestimmtes Produkt bzw. eine vorbestimmte Produktmenge. Die nächste Rollenbahn 70 kann für einen anderen Abnehmer gelten oder für eine andere Ware bzw. Warenmenge.

- Ansprüche -

1. Vorrichtung zum Stapeln, Transport und Befüllen von Behältern mit an gegenüberliegenden Seiten vorhandenen, horizontal oder im wesentlichen horizontal verlaufenden Griffflächen, insbesondere Behälter mit rechteckigem Querschnitt und aus Kunststoff, g e k e n n - z e i c h n e t   d u r c h  eine Stapeleinrichtung (11, 12), bei der die übereinander gestapelten Behälter (27) in vertikaler Ebene absatzweise bewegt sind und bei einem auf der angeschlossenen Transporteinrichtung (41) aufliegenden unteren Behälter (27) des Stapels der darüber befindliche Behälter (27a) des Stapels und der von diesem getragene Stapel der anderen Behälter von einer an gegenüberliegenden Seiten des Behälters anliegenden, in vertikaler Ebene auf- und abbewegbaren Greifern (21, 23) gehalten ist.

2. Vorrichtung nach Anspruch 1, d a d u r c h   g e k e n n - z e i c h n e t , daß die Stapelvorrichtung (11) aus einem Tragteil (18) besteht, das in vertikaler Ebene auf- und abbewegbar ist und zwei Greiferarme (21) aufweist und jeder Greiferarm an seinem Ende eine um die Längsachse des Armes (21) schwenkbares Tragelement (23) aufweist, das in der einen Stellung die Grifffläche (26) des Behälters (27) untergreift und in der anderen Stellung von der Grifffläche entfernt ist.

3. Vorrichtung nach den Ansprüchen 1 und 2, d a d u r c h   g e k e n n z e i c h n e t , daß die Länge des die Arme (21) tragenden Tragteils (18) und die Länge der Arme (21) veränderlich ist.

4. Vorrichtung nach den Ansprüchen 1 bis 3, d a d u r c h

g e k e n n z e i c h n e t , daß das Trageteil aus einem ersten Rohr (18) besteht, an dem einem jeden Ende zugeordnet aus Rohren bestehende Greiferarme (21) befestigt sind und in jedem Greiferarm (21) eine drehbare Stange (22) vorhanden ist, an dem ein Tragelement (23) befestigt ist.

5. Vorrichtung nach den Ansprüchen 1 bis 4, d a d u r c h

g e k e n n z e i c h n e t , daß das Tragelement (23) aus einem L-förmigen Profil besteht, wobei der eine Schenkel (24) an der Stange (22) befestigt ist und der andere Schenkel (25) abhängig von der Verdrehung der Stange (22) die Grifffläche (26) des Behälters

(27) untergreift oder von dieser entfernt ist.

6. Vorrichtung nach den Ansprüchen 4 und 5, d a d u r c h

g e k e n n z e i c h n e t , daß die Greiferarme (21, 21a) aus im Querschnitt rechteckigen Rohreb bestehen, in denen jeweils zugeordnet, die um ihre Längsachse drehbare Stange mit dem Tragelement vorhanden ist und jeder Greiferarm (21, 21a) an der zu dem Behälter (27) gerichteten Seite mit einem Fensterausschnitt versehen ist und abhängig von der Verdrehung der Stange (22) das Tragelement (23) aus dem Fenster herausragt und den Behälter (27) untergreift oder vollständig in dem Inneren des Greiferarmes angeordnet ist.

7. Vorrichtung nach Anspruch 4, d a d u r c h  g e k e n n -

z e i c h n e t , daß an jedem Greiferarm (21, 21a) an der zu dem Behälter (27) zugerichteten Seite eine Sperrklinke angeordnet ist,

- 3 -

die bei einer Bewegung eines Behälters (27) in Richtung von
oben nach unten vom Behälter wegbewegt ist und somit diese
Bewegung zuläßt, aber bei der Bewegung eines Behälters in Richtung
von unten nach oben zu dem Behälter bewegt ist und durch eine
Anlage an dem Behälter (27) dessen Aufwärtsbewegung sperrt.

8. Vorrichtung nach Anspruch 5, d a d u r c h   g e k e n n -
z e i c h n e t , daß die Drehung einer Stange (22) durch eine an
dem Maschinenrahmen befestigten Führungsschiene (34) erfolgt,
an der zur Drehung der Stange (22) ein an dieser Stange befestigter
Hebel (39) angeordnet ist.

9. Vorrichtung nach Anspruch 1 und einem oder mehreren der
Ansprüche 2 bis 8, d a d u r c h   g e k e n n z e i c h n e t ,
daß die Stapelvorrichtung aus einer Säule (13, 13a) besteht, an
denen das Tragteil (18) geführt ist.

10. Vorrichtung nach Anspruch 1, d a d u r c h   g e k e n n -
z e i c h n e t , daß die an die Stapelvorrichtung (11) angeschlossene Transportvorrichtung (41) um eine an der Stapelvorrichtung
angelenkte Achse (44) hochschwenkbar ist.

11. Vorrichtung nach Anspruch 10, d a d u r c h   g e k e n n -
z e i c h n e t , daß der elektrische Antriebsmotor (42) für das
Förderband (41) an dem Gestell der Stapelvorrichtung (11) befestigt
ist, die abgehende Welle des Elektromotors mit einem Zahnrad (43)

- 4 -

versehen ist und die Umlenkwalze des Förderbandes als Antriebswalze mit einem Kettenrad versehen ist.

12. Vorrichtung nach Anspruch 1 und einem oder mehreren der
Ansprüche 2 bis 11, d a d u r c h   g e k e n n z e i c h n e t ,
daß eine erste Stapelvorrichtung (11) vorhanden ist, in der die
übereinander gestapelten leeren Behälter (27) nach unten geführt
sind und der jeweils untere Behälter auf eine Transporteinrichtung
(41) abgelegt und mit diesem unter eine Füllstation (45) geführt
ist und an die Füllstation bzw. das Ende der Transporteinrichtung
eine Stapelvorrichtung (12) vorhanden ist, die die gefüllten Behälter
(27) nach oben führt.

13. Vorrichtung nach Anspruch 12, d a d u r c h   g e k e n n -
z e i c h n e t , daß die Vorrichtung zum Hochtransport der
gefüllten Behälter der Vorrichtung zum Transport der leeren Behälter
nach unten entspricht.

14. Vorrichtung nach Anspruch 12, d a d u r c h   g e k e n n -
z e i c h n e t , daß im Anschluß an die Füllstation ein weiteres,
in Horizontalebene förderndes Förderband (59) angeordnet ist und
dieses Förderband zusammen mit dem auf diesem aufliegenden gefüllten
Behälter (27) in einem Gestell (66, 66a) angeordnet ist, das mit
Einrichtungen zum Anheben und Absenken des Förderbandes (59)
versehen ist und an diesem Gestell jeweils verschiedenen Höhenlagen zugeordnet, mehrere wegführende Fördereinrichtungen (69,70)
vorhanden sind.

- 5 -

15. Vorrichtung nach Anspruch 14, d a d u r c h   g e k e n n -
z e i c h n e t , daß die wegführenden Fördereinrichtungen (69, 70)
aus leicht nach unten geneigten Rollenbahnen bestehen.

FIG.1

0143945

Kn702

FIG.2

10

12

11

27d

27c

27b

FIG.3

FIG.4

FIG.5

FIG.6

FIG.7

FIG.8

FIG.9

FIG.11

FIG.10

FIG.12

Kn 702

FIG.13

0143945

FIG. 14

0143945

**Nummer der Anmeldung**

## EUROPÄISCHER RECHERCHENBERICHT

Europäisches
Patentamt

EP 84 11 1911

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 143 807 (H. SCHAEFER KG)<br><br>* Seite 1; Seite 7, Zeile 3 - Seite 9, Zeile 11; Seite 10, Absatz 2; Figur 1 * | 1,2,5 8,9, | B 65 G 60/00 |
| Y | | 12,13 | |
| | --- | | |
| X | GB-A-2 086 831 (VICKERS Ltd.)<br><br>* Seite 5, Zeilen 45-71; Figuren * | 1,2 | |
| | --- | | |
| Y | DE-A-1 938 538 (HAIN & CO. KG.)<br><br>* Seite 6, Absatz 2 - Seite 7, Absatz 2; Figuren 1,2 * | 12,13 | |
| | --- | | RECHERCHIERTE SACHGEBIETE (Int. Cl.4) |
| A | GB-A-1 136 352 (MATHEWS CONVEYOR COMPANY LIMITED)<br><br>* Seite 7, Zeilen 3-31; Figur 20 * | 2,3,4 6 | B 65 G |
| | --- | | |
| A | FR-A-2 297 796 (MOHNDRUCK REINHARD MOHN OHG)<br><br>* Seite 8, Zeilen 6-10; Figuren 8,9 * | 10,11 | |
| | --- | | |
| A | DE-A-1 908 147 (FISONS Ltd.) | 14 | |
| | -/- | | |

Der vorliegende Recherchenbericht wurde für alle Patentansprüche erstellt.

| Recherchenort | Abschlußdatum der Recherche | Prüfer |
|---|---|---|
| DEN HAAG | 09-01-1985 | GRENTZIUS |

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | \* Seite 5, letzter Absatz – Seite 6, erster Absatz; Figur 4 \*<br><br>----- | | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 09-01-1985 | GRENTZIUS |